(19) Europäisches Patentamt
European Patent Office
Office européen des brevets

(11) **EP 4 646 915 A1**

(12) **EUROPÄISCHE PATENTANMELDUNG**

(43) Veröffentlichungstag:
**12.11.2025   Patentblatt 2025/46**

(21) Anmeldenummer: **25167285.3**

(22) Anmeldetag: **31.03.2025**

(51) Internationale Patentklassifikation (IPC):
**A01D 41/14** (2006.01)

(52) Gemeinsame Patentklassifikation (CPC):
**A01D 41/141**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **08.05.2024   DE 102024112871**

(71) Anmelder: **CLAAS Selbstfahrende Erntemaschinen GmbH**
**33428 Harsewinkel (DE)**

(72) Erfinder:
• **Füchtling, Christian**
  **48317 Rinkerode Drenstein (DE)**
• **Wielenberg, Andreas**
  **32049 Herford (DE)**
• **Hinz, Thomas**
  **33428 Harsewinkel (DE)**
• **Beschorn, Udo**
  **33428 Harsewinkel (DE)**

(74) Vertreter: **CLAAS Gruppe**
**Mühlenwinkel 1**
**33428 Harsewinkel (DE)**

(54) **VERFAHREN ZUM BETREIBEN EINES AN EINER AUFNAHMEVORRICHTUNG EINES MÄHDRESCHERS ANGEORDNETEN VORSATZGERÄTES SOWIE SELBSTFAHRENDER MÄHDRESCHER**

(57)   Die vorliegende Erfindung betrifft ein Verfahren zum Betreiben eines an einer durch Aktoren (5) höhenverstellbaren Aufnahmevorrichtung (3) eines selbstfahrenden Mähdreschers (1) angeordneten Vorsatzgerätes (2, 20), welches ein Mittensegment (21) und zumindest zwei Seitensegmente (22R, 22L) umfasst, mit jeweils zumindest einem an den Seitensegmenten (22R, 22L) angeordneten mit einer druckgeregelten Stützkraft beaufschlagten, lageveränderbaren Stützelement (33R, 33L), wobei in einem ersten Betriebsmodus ein Abstand (12) zwischen Boden (10) und Vorsatzgerät (2, 20) mittels an der Unterseite des Vorsatzgerätes (2, 20) angeordneter, den Boden (10) kontaktierenden Abstandssensoren (13) durchgeführt wird, deren Signale einer Steuerungsvorrichtung (17) zur Auswertung zugeführt werden, um in Abhängigkeit von den Signalen eine Querregelung des Vorsatzgerätes (2, 20) und/oder der jeweiligen Seitensegmente (22R, 22L) anzusteuern, wobei ein Querlagewinkel ($\gamma$) des Vorsatzgerätes (2, 20) durch Schwenken um eine virtuelle Pendelachse (8) der Aufnahmevorrichtung (3) eingestellt wird, wobei in einem zweiten Betriebsmodus, in welchem nur die Stützelemente (32R, 32L) mit dem Boden (10) in Kontakt stehen, eine Querregelung des Vorsatzgerätes (2, 20) und/oder der jeweiligen Seitensegmente (21) in Abhängigkeit von Signalen, die von den Stützelementen (32R, 32L) zugeordneten Sensoreinheiten (34) zur Bestimmung des Abstandes (12) des Vorsatzgerätes (2, 20) und/oder der jeweiligen Seitensegmente (22R, 22L) zum Boden (10) bereitgestellt werden, durchgeführt wird.

Fig. 3

EP 4 646 915 A1

**Beschreibung**

Die vorliegende Erfindung betrifft ein Verfahren zum Betreiben eines an einer durch Aktoren höhenverstellbaren Aufnahmevorrichtung eines selbstfahrenden Mähdreschers angeordneten Vorsatzgerätes gemäß dem Oberbegriff des Anspruches 1. Weiterhin ist ein selbstfahrender Mähdrescher gemäß dem Oberbegriff des Anspruches 12 Gegenstand der vorliegenden Erfindung.

Ein Verfahren zum Betreiben eines an einer durch Aktoren höhenverstellbaren Aufnahmevorrichtung eines selbstfahrenden Mähdreschers angeordneten Vorsatzgerätes sowie ein selbstfahrender Mähdrescher der eingangs genannten Art sind aus der Offenlegungsschrift EP 4 162 789 A1 bekannt. Darin ist ein Verfahren zur Schnitthöhenregelung des Vorsatzgerätes offenbart, welches den Abstand des Vorsatzgerätes zum Boden durch Auswertung von Sensorsignalen, die von mehreren den Boden kontaktierenden Tastbügeln, die an den einzelnen Segmenten des Vorsatzgerätes angeordnet sind, bestimmt. Zur Bodenführung mittels Schnitthöhenregelung werden bei diesem Vorsatz drei separate Regelungen ausgeführt. Es wird eine Höhenregelung, eine Querregelung des gesamten Vorsatzgerätes sowie eine Querregelung der einzelnen Seitensegmente relativ zum Mittensegment durchgeführt. Hierfür wird der Abstand zwischen Vorsatzgerät und Boden über die Breite an mehreren Stellen durch die Tastbügel erfasst. Der Messbereich der Abstandsbestimmung wird durch die den Boden kontaktierenden Tastbügel beschränkt. Damit einher geht die Beschränkung des Arbeitsbereiches der Schnitthöhenregelung, da diese auf den Messbereich der Tastbügel beschränkt ist. Dies ist insoweit von Nachteil, dass bei einem Abschneiden von Erntegut oberhalb des Messbereiches der Tastbügel, wie dies beispielsweise bei Raps der Fall sein kann, die Sensorsignale der Tastbügel für die Querregelung des Vorsatzgerätes oder der Seitensegmente nicht zur Verfügung stehen. Somit sind entweder berührungslos arbeitende Abstandssensoren notwendig, die bei der eingestellten Schnitthöhe zuverlässig den Abstand zum Boden detektieren oder diese Aufgabe kommt dem Bediener des Mähdreschers zu, was diesen schnell überfordern kann.

Ausgehend vom vorstehend genannten Stand der Technik liegt der Erfindung die Aufgabe zugrunde, ein Verfahren zum Betreiben eines an einer durch Aktoren höhenverstellbaren Aufnahmevorrichtung eines selbstfahrenden Mähdreschers angeordneten Vorsatzgerätes der eingangs genannten Art sowie einen selbstfahrenden Mähdrescher derart weiterzubilden, dass eine Querregelung des Vorsatzgerätes oberhalb des Messbereiches der den Boden kontaktierenden Abstandssensoren ermöglicht wird. Insbesondere soll auf zusätzliche, beispielsweise berührungslos arbeitende, Sensoren zur Abstandsbestimmung am Vorsatzgerät verzichtet werden.

Die vorstehend genannte Aufgabe wird erfindungsgemäß durch ein Verfahren mit den Merkmalen des Anspruches 1 gelöst. Weiterhin wird die Aufgabe durch einen selbstfahrenden Mähdrescher mit den Merkmalen des nebengeordneten Anspruches 12 gelöst. Vorteilhafte Weiterbildungen sind Gegenstand der abhängigen Ansprüche.

Gemäß dem Anspruch 1 wird ein Verfahren zum Betreiben eines an einer durch Aktoren höhenverstellbaren Aufnahmevorrichtung eines selbstfahrenden Mähdreschers angeordneten Vorsatzgerätes vorgeschlagen. Die Aufnahmevorrichtung dient der Anordnung des Vorsatzgerätes am Mähdrescher sowie der Förderung von aufgenommenem Erntegut. Hierzu ist in der Aufnahmevorrichtung eine Fördervorrichtung angeordnet, beispielsweise ein Schrägförderer. Das Vorsatzgerät umfasst ein Mittensegment und zumindest zwei Seitensegmente, mit jeweils zumindest einem an den Seitensegmenten angeordneten, mit einer druckgeregelten Stützkraft beaufschlagten, lageveränderbaren Stützelement, wobei in einem ersten Betriebsmodus ein Abstand zwischen Boden und Vorsatzgerät mittels an der Unterseite des Vorsatzgerätes angeordneter, den Boden kontaktierenden Abstandssensoren bestimmt wird, deren Signale einer Steuerungsvorrichtung zur Auswertung zugeführt werden, um in Abhängigkeit von den Signalen eine Querregelung des Vorsatzgerätes und/oder der jeweiligen Seitensegmente anzusteuern, wobei ein Querlagewinkel des Vorsatzgerätes durch Schwenken um eine virtuelle Pendelachse der Aufnahmevorrichtung eingestellt wird. Erfindungsgemäß ist vorgesehen, dass in einem zweiten Betriebsmodus, in welchem nur die Stützelemente mit dem Boden in Kontakt stehen, eine Querregelung des Vorsatzgerätes und/oder der jeweiligen Seitensegmente in Abhängigkeit von Signalen, die von den Stützelementen zugeordneten Sensoreinheiten zur Bestimmung des Abstandes des Vorsatzgerätes und/oder der jeweiligen Seitensegmente zum Boden bereitgestellt werden, durchgeführt wird.

Wesentlich für die vorschlagsgemäße Lösung ist nun, dass die Querregelung des Vorsatzgerätes und/oder der jeweiligen Seitensegmente mittels der Sensorsignale durchgeführt wird, die von den Sensoreinheiten, die den mit einer einstellbaren Stützkraft beaufschlagten Stützelementen zugeordnet sind, bereitgestellt werden. Die Querregelung des Vorsatzgerätes und/oder der jeweiligen Seitensegmente im zweiten Betriebsmodus erfolgt dabei indirekt, d.h. unter Verwendung von Signalen zur Abstandsbestimmung, die unabhängig von den mit dem Boden in Kontakt stehenden Abstandssensoren verfügbar sind.

Insbesondere kann das Vorsatzgerät im zweiten Betriebsmodus im Hochschnitt betrieben werden. Beim Hochschnitt wird der Abstand zum Boden durch eine mittels Aktoren eingestellte Höhe der Aufnahmevorrichtung bestimmt. Dabei weisen die Abstandssensoren keinen Bodenkontakt auf.

Vorteilhaft ist, dass die Anzahl an zusätzlichen Sensoren, die zur Detektion des Abstandes zum Boden in dem zweiten Betriebsmodus gemäß dem Stand der Technik erforderlich sind, durch das Verfahren signifikant reduziert wird.

Insbesondere kann durch die Sensoreinheiten eine vertikale Auslenkung des jeweiligen Stützelementes detektiert werden. Die Stützelemente können passiv oder aktiv betätigt werden. Passive Stützelemente können mit einer hydropneumatischen Federung ausgeführt sein. Aktive Stützelemente können mit durch eine Druckregelung ansteuerbaren Aktoren, insbesondere Hydraulikzylindern, ausgeführt sein, welche die Stützelemente mit einer Stützkraft beaufschlagen, mit der sich die Stützelemente am Boden abstützen. Durch eine Änderung der Druckbeaufschlagung der Aktoren, wird die Stützkraft, mit der sich die Stützelemente gegenüber dem Boden abstützen, verstellt, wodurch sich die vertikale Auslenkung der Stützelemente verändert.

Dabei kann in dem zweiten Betriebsmodus zur Querregelung des Vorsatzgerätes in Abhängigkeit von einer Auslenkungsdifferenz der Auslenkung der Stützelemente geregelt werden, indem die druckgeregelten Aktoren an den Stützelemente angesteuert werden, bis die Auslenkungsdifferenz im Wesentlichen Null beträgt.

Alternativ kann in dem zweiten Betriebsmodus zur Querregelung des Vorsatzgerätes in Abhängigkeit von einer Auslenkungsdifferenz der Stützelemente geregelt werden, indem zumindest ein Aktor an der Aufnahmevorrichtung angesteuert wird, durch den das Vorsatzgerätes um seine virtuelle Pendelachse geschwenkt werden kann, bis die Auslenkungsdifferenz im Wesentlichen Null beträgt. Die Auslenkungsdifferenz der Stützelemente wird aus der Differenz der detektierten Auslenkung des jeweiligen Stützelementes bestimmt.

Wird zur Querregelung des Vorsatzgerätes in Abhängigkeit von der Auslenkungsdifferenz der Auslenkung der Stützelemente geregelt, indem die druckgeregelten Aktoren der Stützelemente angesteuert werden, wird der zumindest eine Aktor an der Aufnahmevorrichtung in einer Schwimmstellung betrieben werden, sodass nur durch die Ansteuerung der Aktoren an den Stützelementen mittels der Druckregelung die Stützelemente aktiv beeinflusst werden, bis die Auslenkungsdifferenz der Stützelemente im Wesentlichen Null beträgt.

Bevorzugt kann bei der Bestimmung der Auslenkungsdifferenz ein Skalierungsfaktor verwendet werden. Durch den Skalierungsfaktor kann eine systematische Abweichung berücksichtigt werden, die sich bei der Bestimmung der Auslenkungsdifferenz ergibt. Der Skalierungsfaktor für die Auslenkungsdifferenz kann auf Grundlage der technischen und/oder geometrischen Beschaffenheit der Stützelemente und/oder experimentell ermittelt werden.

Gemäß einer Weiterbildung kann zur Höhensteuerung des Vorsatzgerätes ein Neigungswinkel der Aufnahmevorrichtung verwendet werden. Der Neigungswinkel kann durch zumindest einen Winkelsensor und/oder durch Detektion der Verstellung der Aktoren an der Aufnahmevorrichtung mittels zumindest eines Wegaufnehmers bestimmt werden.

Bevorzugt können die Seitensegmente jeweils durch ein Rahmengelenk mit dem Mittensegment um eine in Fahrtrichtung orientierte Schwenkachse schwenkbar verbunden sein, wobei das jeweilige Seitensegment zur Querregelung mittels jeweils zumindest eines Aktors, die von der Steuerungsvorrichtung voneinander unabhängig angesteuert werden, relativ zum Mittensegment um die Schwenkachse verschwenkt wird. Dadurch kann die Steuerung oder Regelung der Seitensegmente unabhängig von einer Höhen- und/oder Querführung des Vorsatzgerätes durchgeführt werden. Jedes Seitensegment kann auf Änderungen in der Bodenkontur reagieren, wobei die Positionierung der Seitensegmente unabhängig von der Höhen- und Querführung des Vorsatzgerätes in seiner Gesamtheit erfolgen kann. Hierdurch lässt sich eine optimierte Anpassung an die bestehende Bodenkontur erreichen.

Insbesondere kann im zweiten Betriebsmodus die Position des jeweiligen Seitensegmentes relativ zum Mittensegment in Abhängigkeit von einer Abstandsdifferenz des jeweiligen Seitensegmentes zum Boden berechnet werden, wobei die Abstandsdifferenz aus von den Signalen der Abstandssensoren unabhängigen Messgrößen bestimmt wird. Die Abstandsdifferenz eines Seitensegmentes bestimmt sich bezogen auf die Anordnung am Mittensegment aus der Differenz des proximalen und distalen Abstands des Seitensegments zum Boden. Insbesondere kann hierzu im Bereich des jeweiligen Rahmengelenkes die Position des jeweiligen Seitensegmentes relativ zum Mittensegment durch Interpolation bestimmt werden. Im Bereich des Rahmengelenks kann der Abstand zum Boden aus dem Neigungswinkel der Aufnahmevorrichtung und Querlagewinkel des Mittensegmentes bestimmt werden.

Dabei kann im zweiten Betriebsmodus die Querregelung des jeweiligen Seitensegmentes in Abhängigkeit vom Neigungswinkel der Aufnahmevorrichtung, einem Querlagewinkel des Mittensegmentes, einer Neigung des jeweiligen Seitensegmentes zum Mittensegment als unabhängige Messgrößen sowie der Auslenkung des dem jeweiligen Seitensegment zugeordneten Stützelementes durchgeführt werden. Hierdurch kann der Arbeitsbereich der Schnitthöhenregelung über den Messbereich der den Boden kontaktierenden Abstandssensoren hinaus ausgedehnt werden. Dadurch kann eine Parallelstellung des jeweiligen Seitensegmentes zum Boden auch dann erreicht werden, wenn im zweiten Betriebsmodus die Signale der den Boden kontaktierenden Abstandssensoren nicht zur Verfügung stehen. Dies kann insbesondere beim Hochschnitt der Fall sein.

Insbesondere kann im zweiten Betriebsmodus auch die Querregelung eines starren oder starr betreibbaren Vorsatzgerätes die Kombination aus Neigungswinkel der Aufnahmevorrichtung, Querlagewinkel des Mittensegmentes sowie der Auslenkung des dem jeweiligen Seitensegment zugeordneten Stützelementes verwendet werden, um den Arbeitsbereich der Schnitthöhenregelung über den Messbereich der den Boden kontaktierenden Abstandssensoren hinaus auszudehnen.

Weiterhin kann bei der Bestimmung der Abstandsdifferenz zumindest ein Skalierungsfaktor für die jeweilige unabhängige Messgröße verwendet werden. Durch die für jede Messgröße spezifischen Skalierungsfaktoren kann eine systematische Abweichung berücksichtigt werden, die sich bei der Bestimmung der Abstandsdifferenz ergibt.

Ein weiterer Vorteil ergibt sich daraus, dass die Skalierungsfaktoren unterschiedlich gewichtet sein können, wodurch das Reaktionsverhalten von Vorsatzgerät und Aktoren bei deren Ansteuerung und/oder die Messempfindlichkeit beeinflussbar sind.

Gemäß einer bevorzugten Weiterbildung können als den Boden kontaktierende Abstandssensoren schwenkbare Tastbügel verwendet werden, deren Ist-Schwenkposition durch diesen zugeordnete Sensoren detektiert wird, wobei die detektierte Ist-Schwenkposition im zweiten Betriebsmodus mit einem in der Steuerungsvorrichtung hinterlegten oder hinterlegbaren Schwellwert verglichen wird.

Insbesondere können im zweiten Betriebsmodus bei einem Unterschreiten des Schwellwertes die Signale der Tastbügel bei der Querregelung des Vorsatzgerätes und/oder der jeweiligen Seitensegmente berücksichtigt werden. Die Bodenführung des Vorsatzgerätes kann im zweiten Betriebsmodus aufgrund der Verwendung von Ersatzgrößen anstelle der Signale der als Tastbügel ausgeführten Abstandssensoren eine geringere Präzision aufweisen.

So kann im Verlauf der Regelung der Abstand zwischen Vorsatzgerät und Boden im Bereich zumindest eines Tastbügels so gering werden, dass dieser mit dem Boden in Kontakt kommen kann. Dabei bleiben die Signale des zumindest einen Tastbügels im zweiten Betriebsmodus unberücksichtigt, sofern der Schwellwert für die Ist-Schwenkposition nicht unterschritten wird. Erst wenn die Ist-Schwenkposition zumindest eines Tastbügels aufgrund des abnehmenden Abstandes zum Boden geringer als der Schwellwert ist, wird das Signal der Tastbügel in der entsprechenden Querregelung des zweiten Betriebsmodus berücksichtigt, um eine Kollision des Vorsatzgerätes und/oder eines Seitensegmentes mit dem Boden zu verhindern.

Die eingangs gestellte Aufgabe wird weiterhin durch einen Mähdrescher mit den Merkmalen des nebengeordneten Anspruches 12 gelöst.

Gemäß dem Anspruch 12 wird ein selbstfahrender Mähdrescher mit einer höhenverstellbaren Aufnahmevorrichtung vorgeschlagen, an der ein Vorsatzgerät angeordnet ist, welches einen Mittensegment und zumindest zwei Seitensegmente umfasst, wobei an den Seitensegmenten jeweils zumindest ein mit einer druckgeregelten Stützkraft beaufschlagtes, lageveränderbares Stützelement angeordnet ist, wobei zur Bestimmung eines Abstandes zwischen Boden und Vorsatzgerät an der Unterseite des Vorsatzgerätes den Boden kontaktierende Abstandssensoren angeordnet sind, wobei eine Steuerungsvorrichtung zur Auswertung der in einem ersten Betriebsmodus von den Abstandssensoren bereitgestellten Signalen vorgesehen ist, um im ersten Betriebsmodus in Abhängigkeit von den Signalen eine Querregelung des Vorsatzgerätes und/oder der jeweiligen Seitensegmente anzusteuern, wobei die Steuerungsvorrichtung dazu eingerichtet ist, einen Querlagewinkel des Vorsatzgerätes durch Schwenken um eine virtuelle Pendelachse der Aufnahmevorrichtung einzustellen. Hierzu ist die Steuerungsvorrichtung dazu eingerichtet, in einem zweiten Betriebsmodus, in welchem nur die Stützelemente mit dem Boden in Kontakt stehen, eine Querregelung des Vorsatzgerätes und/oder der jeweiligen Seitensegmente in Abhängigkeit von Signalen, die von den Stützelementen zugeordneten Sensoreinheiten zur Bestimmung eines Abstandes des Vorsatzgerätes und/oder der jeweiligen Seitensegmente zum Boden bereitgestellt werden, durchzuführen. Auf die erfindungsgemäßen Ausführungen zum Verfahren darf verwiesen werden.

Insbesondere ist der selbstfahrende Mähdrescher dazu ausgeführt und eingerichtet, das Verfahren nach einem der Ansprüche 1 bis 11 durchzuführen.

Bevorzugt kann die Steuerungsvorrichtung dazu eingerichtet sein, in dem zweiten Betriebsmodus die Querregelung des Vorsatzgerätes in Abhängigkeit von einer Auslenkungsdifferenz der Stützelemente zu regeln, indem den Stützelementen zugeordnete druckgeregelte Aktoren angesteuert werden, bis die Auslenkungsdifferenz der Stützelemente im Wesentlichen Null beträgt.

Gemäß einer Weiterbildung können die Seitensegmente jeweils durch ein Rahmengelenk mit dem Mittensegment um eine in Fahrtrichtung orientierte Schwenkachse schwenkbar verbunden sein, wobei das jeweilige Seitensegment zur Querregelung mittels eines von der Steuerungsvorrichtung angesteuerten Aktors relativ zum Mittensegment um die Schwenkachse quer zur Fahrrichtung verschwenkbar ist, wobei die Steuerungsvorrichtung dazu eingerichtet ist, im zweiten Betriebsmodus die Position des jeweiligen Seitensegmentes relativ zum Mittensegment zu bestimmen, wobei die Steuerungsvorrichtung eine Abstandsdifferenz des jeweiligen Seitensegmentes zum Boden aus von den Signalen der Abstandssensoren unabhängigen Messgrößen bestimmt.

Weiter bevorzugt kann die Steuerungsvorrichtung dazu eingerichtet sein, im zweiten Betriebsmodus die Querregelung des jeweiligen Seitensegmentes in Abhängigkeit vom Neigungswinkel der Aufnahmevorrichtung, einem Querlagewinkel des Mittensegmentes, einer Neigung des jeweiligen Seitensegmentes zum Mittensegment sowie der Auslenkung des dem jeweiligen Seitensegment zugeordneten Stützelementes als von den Signalen der Abstandssensoren unabhängige Messgrößen durchzuführen.

Die vorliegende Erfindung wird nachstehend anhand eines in den Zeichnungen dargestellten Ausführungsbeispieles näher erläutert.

Es zeigen:

Fig. 1    schematisch und exemplarisch eine Teilansicht eines Mähdreschers mit einem daran angeordneten Vorsatzgerät;

Fig. 2    schematisch und exemplarisch eine Teilansicht eines als Bandschneidwerk ausgeführten Vorsatzgerätes; und

Fig. 3    eine schematische und stark vereinfachte Darstellung des als Bandschneidwerk ausgeführten segmentierten Vorsatzgerätes gemäß Fig. 2.

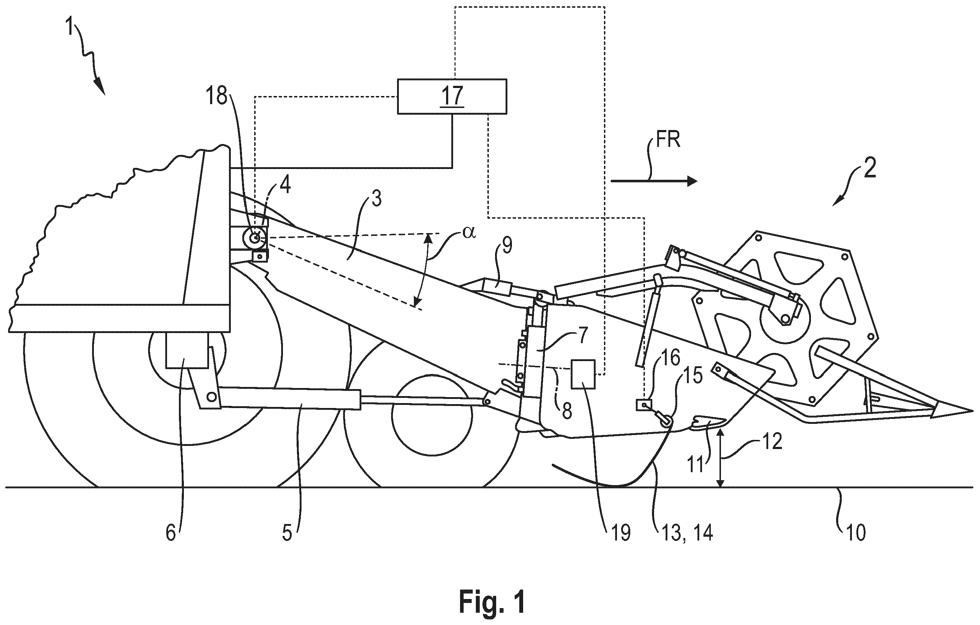

In Fig. 1 ist schematisch und exemplarisch eine Teilansicht eines Mähdreschers 1 mit einem daran angeordneten Vorsatzgerät 2 dargestellt. Das Vorsatzgerät 2 ist an einer Aufnahmevorrichtung 3 angeordnet. Die Aufnahmevorrichtung 3 ist um eine quer zur Fahrtrichtung FR orientierte Schwenkachse 4 in vertikaler Richtung verschwenkbar. Die Aufnahmevorrichtung 3 ist durch zumindest einen Aktor 5, der mit einem Ende an einer Konsole 6 des Mähdreschers 1 und mit seinem anderen Ende an der Aufnahmevorrichtung 3 angelenkt ist, um die quer zur Fahrtrichtung FR verlaufende Schwenkachse 4 schwenkbar. Der zumindest eine Aktor 5 ist bevorzugt als Hydraulikzylinder ausgeführt.

Mittels zumindest eines Aktors 7 kann eine Queranpassung des Vorsatzgerätes 2 auf das aktuelle Bodenniveau geregelt werden, wobei im vorliegenden Ausführungsbeispiel der als Hubzylinder ausgeführte zumindest eine Aktor 7 das Vorsatzgerät 2 in an sich bekannter Weise um eine in Fahrtrichtung FR weisende virtuelle Pendelachse 8 verschwenken kann. Mittels eines Winkelsensors 19 lässt sich der Winkel, um den das Vorsatzgerät 2 um die Pendelachse 8 verschwenkt ist, bestimmen. Ein auf der Oberseite der Aufnahmevorrichtung 3 angeordneter Hydraulikzylinder 9 ermöglicht es, einen Schnittwinkel einzustellen, welcher vom Vorsatzgerät 2 und vom Boden 10 eingeschlossen wird.

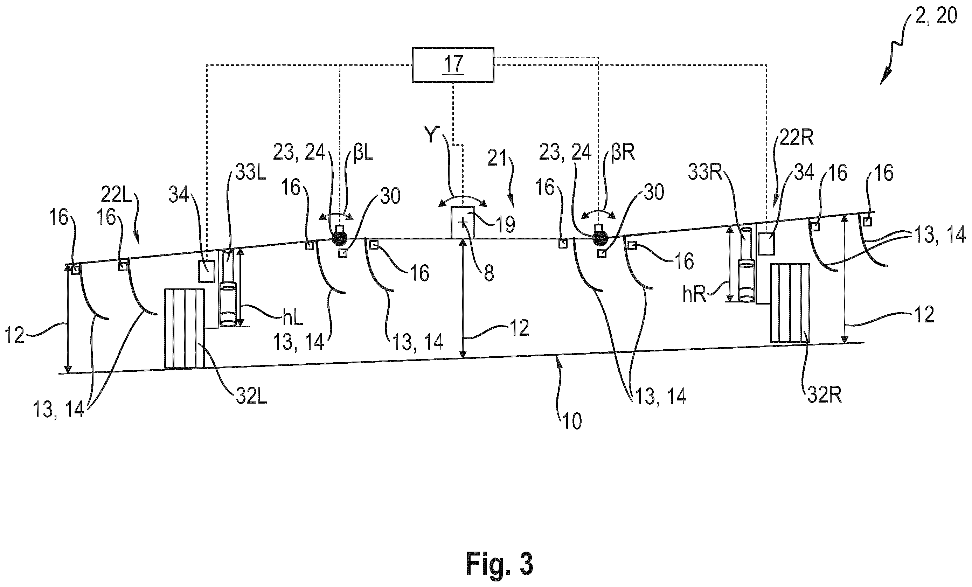

Das Vorsatzgerät 2 umfasst einen Messerbalken 11, welcher in einem einstellbaren vertikalen Abstand 12 zum Boden 10 geführt wird. Der vertikale Abstand 12 wird durch die Aktoren 5 an der Aufnahmevorrichtung 3 eingestellt. Um in einem ersten Betriebsmodus die Einhaltung des Abstands 12 zum Boden 10 zu überwachen, sind an der Unterseite des Vorsatzgerätes 2 mehrere den Boden 10 kontaktierende Abstandssensoren 13 angeordnet. Im dargestellten Ausführungsbeispiel sind die Abstandssensoren 13 als Tastbügel 14 ausgeführt, wie aus Fig. 3 ersichtlich. Die Tastbügel 14 sind jeweils um eine quer zur Fahrtrichtung FR verlaufende Achse 15 schwenkbar. Die Schwenkbewegung des jeweiligen Tastbügels 14 wird mittels jeweils eines Sensors 16, welcher mit der jeweiligen Achse 15 gekoppelt ist, bestimmt. Die Sensoren 16 können bevorzugt als Potentiometer ausgeführt sein. Zur Ansteuerung des Mähdreschers 1 und dessen Arbeitsaggregaten, wozu unter anderem das Vorsatzgerät 2 und die Aufnahmevorrichtung 3 zählen, ist eine Steuerungsvorrichtung 17 vorgesehen.

Durch zumindest einen Winkelsensor 18 und/oder durch Detektion der Verstellung der Aktoren 5 an der Aufnahmevorrichtung 3 mittels zumindest eines Wegaufnehmers kann ein Neigungswinkel $\alpha$ bestimmt werden. Die Signale des zumindest einen Winkelsensors 18 werden an die Steuerungsvorrichtung 17 zur Auswertung übertragen. Die Aktoren 5 können durch die Steuerungsvorrichtung 17 angesteuert werden.

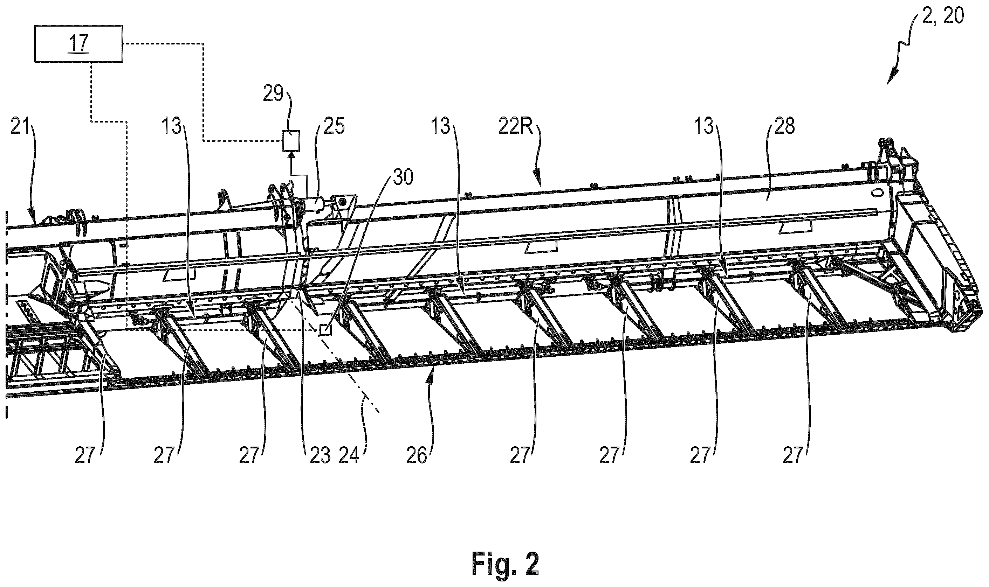

Fig. 2 zeigt schematisch und exemplarisch eine Teilansicht eines als Bandschneidwerk 20 ausgeführten Vorsatzgerätes 2. Der Aufbau des als Bandschneidwerk 20 ausgeführten Vorsatzgerätes 2 ist spiegelsymmetrisch, so dass die nachfolgenden Ausführungen für die nicht dargestellte Hälfte des Bandschneidwerks 20 entsprechend gelten.

Das Bandschneidwerk 20 umfasst ein, in Fig. 2 zur Hälfte dargestelltes, Mittensegment 21 sowie zumindest zwei Seitensegmente 22L, 22R. Von den Seitensegmenten 22L, 22R ist in Fig. 2 lediglich das rechte Seitensegmente 22R gezeigt. Das Bandschneidwerk 20 ist im Bereich des Mittensegmentes 21 wie weiter oben bereits beschrieben an der Aufnahmevorrichtung 3 angeordnet. Zur Förderung des aufgenommenen Erntegutes sind - nicht dargestellte - Förderbänder vorgesehen, welche in bekannter Weise das Erntegut von den Seitensegmenten 22L, 22R seitwärts zum Mittensegment 21 fördern. Das jeweilige Seitensegmente 22L, 22R ist durch jeweils ein Rahmengelenk 23 mit dem Mittensegmente 21 um eine parallel zur Fahrtrichtung FR orientierte und im Wesentlichen horizontal verlaufende Schwenkachse 24 schwenkbar verbunden. Das jeweilige Seitensegmente 22L, 22R ist mittels eines Aktors 25 relativ zum Mittensegment 21 um die Schwenkachse 24 in vertikaler Richtung schwenkbar. Gegenüber dem Mittensegment 21 sind die Seitensegmente 22L, 22R in eine Position überführbar, in welcher sich das äußere Ende des jeweiligen Seitensegmentes 22L, 22R in einer Ebene oberhalb und/oder unterhalb des Mittensegmentes 21 befindet.

Dem hier und vorzugsweise als Hydraulikzylinder ausgeführten Aktor 25 ist ein Drucksensor 29 zugeordnet, durch welchen die Druckbeaufschlagung des Aktors 25 erfasst wird, um diese durch die Steuerungsvorrichtung 17 anzusteuern. Der jeweiligen Schwenkachse 24 ist eine, insbesondere als Potentiometer ausgeführte, Sensoreinrichtung 30 zugeordnet, welche der Bestimmung der Lage des jeweiligen Seitensegmentes 22L, 22R relativ zum Mittensegment 21 dient. Die jeweilige Sensoreinrichtung 30 ist dazu eingerichtet, eine durch das Schwenken um die Schwenkachse 24 hervorgerufene Neigung $\beta R$, $\beta L$ des jeweiligen Seitensegmentes 22L, 22R gegenüber dem Mittensegment 21 zu bestimmen. Die Signale der Sensoreinrichtungen 30 werden an die Steuerungsvorrichtung 17 zur Auswertung übertragen.

Im frontseitigen Bereich des als Bandschneidwerk 20 ausgeführten Vorsatzgerätes 2 ist ein flexibler Messerbalken 26 angeordnet, der sich im Wesentlichen über die Gesamtbreite des Bandschneidwerks 20 erstreckt. Eine Mehrzahl von über die Breite des Bandschneidwerks 20 verteilt angeordneter Tragarme 27, die mit einem Ende um eine quer zur Fahrtrichtung FR verlaufende Achse schwenkbar am in den Mittensegment 21 sowie die zumindest zwei Seitensegmente 22L, 22R unterteilten bzw. segmentierten Rahmen 28 des Bandschneidwerks 20 angeordnet sind, tragen an ihren freien Enden den Messerbalken 26. Durch die individuelle Schwenkbarkeit der Tragarme 27 kann der flexible Messerbalken 26 in vertikaler Richtung eine Ausgleichsbewegung ausführen, um auf eine Änderung der Bodenkontur zu reagieren, die von den über den Boden geführten Tragarmen 27 aufgenommen wird. Dabei kann der Messerbalken 26 eine im Wesentlichen wellenförmige Auslenkung erfahren.

Die Darstellung in Fig. 3 zeigt eine schematische und stark vereinfachte Darstellung des als Bandschneidwerk 20 ausgeführten segmentierten Vorsatzgerätes 2 gemäß Fig. 2 in einer zweiten Betriebsposition. Die vereinfachte Darstellung zeigt die Anordnung der als Tastbügel 14 ausgeführten Abstandssensoren 13 an der Unterseite des Vorsatzgerätes 2.

An den Seitensegmenten 22R, 22L ist jeweils zumindest ein lageveränderbares Stützelement 32R, 32L angeordnet. Das jeweilige lageveränderbare Stützelement 32R, 32L ist um eine zum Vorsatzgerät 2 parallel verlaufende Achse verschwenkbar. Hier und vorzugsweise ist das jeweilige Stützelement 32R, 32L als ein Stützrad ausgeführt.

Die Stützelemente 32R, 32L können passiv oder aktiv betätigt werden, um in vertikaler Richtung durch Einziehen oder Ausfahren in ihrer Höhe verstellt zu werden. Passive Stützelemente 32R, 32L können mit einer hydropneumatischen Federung ausgeführt sein. Hier und vorzugsweise weisen die aktiven Stützelemente 32R, 32L diesen zugeordnete druckgeregelte Aktoren 33R, 33L auf. Die Aktoren 33R, 33L können als ansteuerbare Linearaktoren, insbesondere Hydraulikzylinder, ausgeführt sein, um die Stützelemente 32R, 32L mit einer druckgeregelten Stützkraft zu beaufschlagen. Durch eine Änderung der Druckbeaufschlagung der Aktoren 33R, 33L wird die auf die Stützelemente 32R, 32L wirkende Stützkraft verändert, wodurch sich ihre vertikale Auslenkung hR, hL und damit der Abstand 12 zwischen dem Vorsatzgerät 2 respektive Bandschneidwerk 20 und dem Boden 10 verändert. Eine Druckregelung für die Aktoren 33R, 33L der aktiven Stützelemente 32R, 32L ist aus der DE 10 2021 123 337 A1 bekannt, auf deren Inhalt vollumfänglich Bezug genommen wird.

In der dargestellten zweiten Betriebsposition stehen nur die Stützelemente 32R, 32L mit dem Boden 10 in Kontakt. In diesem zweiten Betriebsmodus, in welchem nur die Stützelemente 32R, 32L mit dem Boden 10 in Kontakt stehen, wird eine Querregelung des Vorsatzgerätes 2 und/oder der jeweiligen Seitensegmente 22R, 22L in Abhängigkeit von Signalen, die von den Stützelementen 32R, 32L zugeordneten Sensoreinheiten 34 zur Bestimmung des Abstands 12 des Vorsatzgerätes und/oder der jeweiligen Seitensegmente 22R, 22L zum Boden 10 bereitgestellt werden, durchgeführt.

Die den Stützelementen 32R, 32L zugeordneten Sensoreinheiten 34 zur Bestimmung der Auslenkung hR, hL zum Boden 10 können beispielsweise als Druck- und/oder Lagesensoren ausgeführt sein. Die Signale der Sensoreinheiten 34 werden an die Steuerungsvorrichtung 17 zur Auswertung übertragen.

Wie aus der beispielhaften Darstellung in Fig. 3 ersichtlich, können die Abstände 12 der Seitensegmente 22R, 22L zum Boden 10 voneinander abweichen, wenn die Seitensegmente 22R, 22L der Bodenkontur folgend in ihrer Neigung βR, βL zum Mittensegment 21 voneinander unabhängig verstellt werden.

Die Neigung des Vorsatzgerätes 2 bzw. des Mittensegmentes 21 des Bandschneidwerks 20 relativ zum Mähdrescher 1 wird als Querlagewinkel γ bezeichnet. Das Vorsatzgerät 2 bzw. das Mittensegment 21 können um die virtuelle Pendelachse 8 verschwenkt werden, wodurch sich der Querlagewinkel γ, d.h. die Schrägneigung relativ zum Mähdrescher 1, einstellt. Der Querlagewinkel γ kann durch zumindest einen Winkelsensor 18 detektiert werden. Die Signale des Winkelsensors 18 werden an die Steuerungsvorrichtung 17 zur Auswertung übertragen.

In dem zweiten Betriebsmodus wird die Querregelung über die gesamte Bereite des Vorsatzgerätes 2 mittels von den Signalen der den Boden 10 kontaktierenden Abstandssensoren 13 unabhängigen Messgrößen, hier der Auslenkung hR, hL der Stützelemente 32R, 32L, durchgeführt.

Hierzu wird im zweiten Betriebsmodus zur Querregelung über die gesamte Bereite des Vorsatzgerätes 2 in Abhängigkeit von einer Auslenkungsdifferenz $\Delta h$ der Auslenkung hR, hL der Stützelemente 32R, 32L geregelt, indem die Aktoren 5 an der Aufnahmevorrichtung 3 angesteuert werden, bis die Auslenkungsdifferenz $\Delta h$ im Wesentlichen Null beträgt.

Die Auslenkungsdifferenz $\Delta h$ bestimmt sich wie folgt:

$$\Delta h = k_0 (hR - hL).$$

Zur Skalierung der Auslenkung hR, hL der Stützelemente 32R, 32L wird ein Skalierungsfaktor $k_0$ verwendet.

Der Neigungswinkel $\alpha$ der Aufnahmevorrichtung 3 wird im ersten und im zweiten Betriebsmodus zur Höhensteuerung des Vorsatzgerätes 2 respektive des Bandschneidwerks 20 verwendet.

Im zweiten Betriebsmodus wird die Position des jeweiligen Seitensegmentes 22R, 22L relativ zum Mittensegment 21 in Abhängigkeit von einer Abstandsdifferenz $\Delta hR$, $\Delta hL$ des jeweiligen Seitensegmentes 22R, 22L zum Boden 10 berechnet. Dabei wird die Abstandsdifferenz $\Delta hR$, $\Delta hL$ aus von den Signalen der den Boden 10 kontaktierenden Abstandssensoren 13 unabhängigen Messgrößen bestimmt.

Hierzu wird im zweiten Betriebsmodus die Querregelung des jeweiligen Seitensegmentes 22R, 22L in Abhängigkeit vom Neigungswinkel $\alpha$ der Aufnahmevorrichtung 3, dem Querlagewinkel $\gamma$ des Mittensegmentes 21, der Neigung $\beta$R, $\beta$L des jeweiligen Seitensegmentes 22R, 22L zum Mittensegment 21 als unabhängige Messgrößen sowie der Auslenkung hR, hL des dem jeweiligen Seitensegment 22R, 22L zugeordneten Stützelementes 32R, 32L durchgeführt.

Insbesondere kann hierzu im Bereich des jeweiligen Rahmengelenkes 23 die Position des jeweiligen Seitensegmentes 22R, 22L relativ zum Mittensegment 21 durch Interpolation bestimmt werden.

Die Bestimmung der Abstandsdifferenz $\Delta$hR des Seitensegmentes 22R und der Abstandsdifferenz $\Delta$hL des Seitensegmentes 22L zum Boden 10 mittels der vorstehend genannten Ersatzgrößen erfolgt für das jeweilige Seitensegment 22R, 22L wie folgt:

$$\Delta hL = k_1 * \alpha - k_2 * \gamma - k_3 * (\beta L - \beta R) - k_4 * hL$$

und

$$\Delta hR = k_1 * \alpha + k_2 * \gamma + k_3 * (\beta L - \beta R) - k_4 * hR.$$

Zur Skalierung der im zweiten Betriebsmodus verwendeten Ersatzgrößen Neigungswinkel $\alpha$, Querlagewinkel $\gamma$, Neigung $\beta$ und Auslenkung hR, hL des jeweiligen Stützelementes 32R, 32L werden Skalierungsfaktoren $k_1$, $k_2$, $k_3$, $k_4$ verwendet.

Die für das jeweilige Seitensegment 22R, 22L bestimmte Abstandsdifferenz $\Delta$hR, $\Delta$hL wird zur individuellen Querregelung des jeweiligen Seitensegmentes 22R, 22L verwendet.

Dadurch kann eine Parallelstellung des jeweiligen Seitensegmentes 22R, 22L zum Boden 10 auch dann erreicht werden, wenn im zweiten Betriebsmodus die Signale der den Boden 10 kontaktierenden Abstandssensoren 13 nicht zur Verfügung stehen.

Mittels der den Tastbügeln 14 zugeordneten Sensoren 16 wird die Ist-Schwenkposition der Tastbügel 14 detektiert. Die detektierte Ist-Schwenkposition wird mit einem in der Steuerungsvorrichtung 17 hinterlegten oder hinterlegbaren Schwellwert verglichen. Im ersten Betriebsmodus wird die Querlageregelung des Vorsatzgerätes 2 und/oder der Seitensegmente 22R, 22L in Abhängigkeit von der Ist-Schwenkposition durchgeführt.

Im zweiten Betriebsmodus werden nur bei einem Unterschreiten des Schwellwertes die Signale der Tastbügel 14 bei der Querregelung des Vorsatzgerätes 2 und/oder der jeweiligen Seitensegmente R22, 22L berücksichtigt.

Die Bodenführung des Vorsatzgerätes 2 kann im zweiten Betriebsmodus aufgrund der Verwendung der Ersatzgrößen anstelle der Signale der als Tastbügel 14 ausgeführten Abstandssensoren 13 eine geringere Präzision aufweisen. So kann im Verlauf der Regelung der Abstand 12 zwischen dem Vorsatzgerät 2 und dem Boden 10 im Bereich zumindest eines Tastbügels 14 so gering werden, dass dieser mit dem Boden 10 in Kontakt kommt. Dabei bleiben die Signale des zumindest einen Tastbügels 14 unberücksichtigt, sofern der Schwellwert für die Ist-Schwenkposition nicht unterschritten wird. Erst wenn die Ist-Schwenkposition zumindest eines Tastbügels 14 aufgrund des abnehmenden Abstandes 12 zum Boden geringer als der Schwellwert ist, wird das Signal der Tastbügel 14 in der entsprechenden Regelung des zweiten Betriebsmodus berücksichtigt, um eine Kollision des Vorsatzgerätes 2 und/oder eines Seitensegmentes 22R, 22L mit dem Boden 10 zu verhindern.

Die Steuerungsvorrichtung 17 ist dazu eingerichtet, im zweiten Betriebsmodus die Querregelung des jeweiligen Seitensegmentes 22R, 22L in Abhängigkeit von den verwendeten Ersatzgrößen Neigungswinkel $\alpha$, Querlagewinkel $\gamma$, Neigung $\beta$ und Auslenkung hR, hL des jeweiligen Stützelementes 32R, 32L als von den Abstandssensoren 13 unabhängige Messgrößen durchzuführen.

## Bezugszeichenliste

| | | | |
|---|---|---|---|
| 1 | Mähdrescher | 33R | Aktor |
| 2 | Vorsatzgerät | 33L | Aktor |
| 3 | Aufnahmevorrichtung | 34 | Sensoreinheit |
| 4 | Schwenkachse | | |
| 5 | Aktor | FR | Fahrtrichtung |
| 6 | Konsole | $\alpha$ | Neigungswinkel |
| 7 | Aktor | $\beta$ | Neigung |
| 8 | Pendelachse | $\beta$ | |
| 9 | Hydraulikzylinder | $\gamma$ | Querlagewinkel |
| 10 | Boden | $\Delta$h | Auslenkungsdifferenz |
| 11 | Messerbalken | $\Delta$hR | Abstandsdifferenz |

(fortgesetzt)

| | | | | |
|---|---|---|---|---|
| 12 | Abstand | ΔhL | Abstandsdifferenz |
| 13 | Abstandssensor | hR | Auslenkung |
| 14 | Tastbügel | hL | Auslenkung |
| 15 | Achse | $k_0$ | Faktor |
| 16 | Sensor | $k_1$ | Faktor |
| 17 | Steuerungsvorrichtung | $k_2$ | Faktor |
| 18 | Winkelsensor | $k_3$ | Faktor |
| 19 | Winkelsensor | $k_4$ | Faktor |
| 20 | Bandschneidwerk | | |
| 21 | Mittensegment | | |
| 22R | Seitensegment | | |
| 22L | Seitensegment | | |
| 23 | Rahmengelenk | | |
| 24 | Schwenkachse | | |
| 25 | Aktor | | |
| 26 | Messerbalken | | |
| 27 | Tragarm | | |
| 28 | Rahmen | | |
| 29 | Drucksensor | | |
| 30 | Sensoreinrichtung | | |
| 32F | Stützelement | | |
| 32L | Stützelement | | |

**Patentansprüche**

1. Verfahren zum Betreiben eines an einer durch Aktoren (5) höhenverstellbaren Aufnahmevorrichtung (3) eines selbstfahrenden Mähdreschers (1) angeordneten Vorsatzgerätes (2, 20), welches ein Mittensegment (21) und zumindest zwei Seitensegmente (22R, 22L) umfasst, mit jeweils zumindest einem an den Seitensegmenten (22R, 22L) angeordneten, mit einer druckgeregelten Stützkraft beaufschlagten, lageveränderbaren Stützelement (32R, 32L), wobei in einem ersten Betriebsmodus ein Abstand (12) zwischen Boden (10) und Vorsatzgerät (2, 20) mittels an der Unterseite des Vorsatzgerätes (2, 20) angeordneter, den Boden (10) kontaktierenden Abstandssensoren (13) bestimmt wird, deren Signale einer Steuerungsvorrichtung (17) zur Auswertung zugeführt werden, um in Abhängigkeit von den Signalen eine Querregelung des Vorsatzgerätes (2, 20) und/oder der jeweiligen Seitensegmente (22R, 22L) anzusteuern, wobei ein Querlagewinkel (γ) des Vorsatzgerätes (2, 20) durch Schwenken um eine virtuelle Pendelachse (8) der Aufnahmevorrichtung (3) eingestellt wird, **dadurch gekennzeichnet, dass** in einem zweiten Betriebsmodus, in welchem nur die Stützelemente (32R, 32L) mit dem Boden (10) in Kontakt stehen, eine Querregelung des Vorsatzgerätes (2, 20) und/oder der jeweiligen Seitensegmente (21) in Abhängigkeit von Signalen, die von den Stützelementen (32R, 32L) zugeordneten Sensoreinheiten (34) zur Bestimmung des Abstandes (12) des Vorsatzgerätes (2, 20) und/oder der jeweiligen Seitensegmente (22R, 22L) zum Boden (10) bereitgestellt werden, durchgeführt wird.

2. Verfahren nach Anspruch 1, **dadurch gekennzeichnet, dass** durch die Sensoreinheiten (34) eine vertikale Auslenkung (hR, hL) des jeweiligen Stützelementes (32R, 32L) detektiert wird.

3. Verfahren nach Anspruch 2, **dadurch gekennzeichnet, dass** in dem zweiten Betriebsmodus zur Querregelung des Vorsatzgerätes (2, 20) in Abhängigkeit von einer Auslenkungsdifferenz (Δh) der Auslenkung (hR, hL) der Stützelemente (32R, 32L) geregelt wird, indem den Stützelementen (32R, 32L) zugeordnete druckgeregelte Aktoren (33R, 33L) angesteuert werden, bis die Auslenkungsdifferenz (Δh) im Wesentlichen Null beträgt.

4. Verfahren nach Anspruch 3, **dadurch gekennzeichnet, dass** bei der Bestimmung der Auslenkungsdifferenz (Δh) ein Skalierungsfaktor ($k_0$) verwendet wird.

5. Verfahren nach einem der vorangehenden Ansprüche, **dadurch gekennzeichnet, dass** zur Höhensteuerung des Vorsatzgerätes (2, 20) ein Neigungswinkel ($\alpha$) der Aufnahmevorrichtung (3) verwendet wird.

6. Verfahren nach einem der Ansprüche 1 bis 5, **dadurch gekennzeichnet, dass** die Seitensegmente (22R, 22L) jeweils durch ein Rahmengelenk (23) mit dem Mittensegment (21) um eine in Fahrtrichtung (FR) orientierte Schwenkachse (24) schwenkbar verbunden sind, wobei das jeweilige Seitensegment (22R, 22L) zur Querregelung mittels jeweils zumindest eines Aktors (25), die von der Steuerungsvorrichtung (17) voneinander unabhängig angesteuert werden, relativ zum Mittensegment (21) um die Schwenkachse (24) verschwenkt wird.

7. Verfahren nach Anspruch 6, **dadurch gekennzeichnet, dass** im zweiten Betriebsmodus die Position des jeweiligen Seitensegmentes (22R, 22L) relativ zum Mittensegment (21) in Abhängigkeit von einer Abstandsdifferenz ($\Delta hR$, $\Delta hL$) des jeweiligen Seitensegmentes (22R, 22L) zum Boden (10) berechnet wird, wobei die Abstandsdifferenz ($\Delta hR$, $\Delta hL$) aus von den Signalen der Abstandssensoren (13) unabhängigen Messgrößen bestimmt wird.

8. Verfahren nach Anspruch 7, **dadurch gekennzeichnet, dass** im zweiten Betriebsmodus die Querregelung des jeweiligen Seitensegmentes (22R, 22L) in Abhängigkeit vom Neigungswinkel ($\alpha$) der Aufnahmevorrichtung (3), einem Querlagewinkel ($\gamma$) des Mittensegmentes (21), einer Neigung ($\beta R$, $\beta L$) des jeweiligen Seitensegmentes (22R, 22L) zum Mittensegment (21) als unabhängige Messgrößen sowie der Auslenkung (hR, hL) des dem jeweiligen Seitensegment (22R, 22L) zugeordneten Stützelementes (32R, 32L) durchgeführt wird.

9. Verfahren nach Anspruch 7 oder 8, **dadurch gekennzeichnet, dass** bei der Bestimmung der Abstandsdifferenz ($\Delta hR$, $\Delta hL$) zumindest ein Skalierungsfaktor ($k_1$, $k_2$, $k_3$, $k_4$) für die jeweilige unabhängige Messgröße verwendet wird.

10. Verfahren nach einem der vorangehenden Ansprüche, **dadurch gekennzeichnet, dass** als den Boden (10) kontaktierende Abstandssensoren (13) schwenkbare Tastbügel (14) verwendet werden, deren Ist-Schwenkposition durch diesen zugeordnete Sensoren (16) detektiert wird, wobei die detektierte Ist-Schwenkposition im zweiten Betriebsmodus mit einem in der Steuerungsvorrichtung (17) hinterlegten oder hinterlegbaren Schwellwert verglichen wird.

11. Verfahren nach Anspruch 10, **dadurch gekennzeichnet, dass** im zweiten Betriebsmodus bei einem Unterschreiten des Schwellwertes die Signale der Tastbügel (14) bei der Querregelung des Vorsatzgerätes (2, 20) und/oder der jeweiligen Seitensegmente (22R, 22L) berücksichtigt werden.

12. Selbstfahrender Mähdrescher (1) mit einer höhenverstellbaren Aufnahmevorrichtung (3), an der ein Vorsatzgerät (2, 20) angeordnet ist, welches einen Mittensegment (21) und zumindest zwei Seitensegmente (22R, 22L) umfasst, wobei an den Seitensegmenten (22R, 22L) jeweils zumindest ein mit einer druckgeregelten Stützkraft beaufschlagtes, lageveränderbares Stützelement (32R, 32L) angeordnet ist, wobei zur Bestimmung eines Abstandes (12) zwischen Boden (10) und Vorsatzgerät (2, 20) an der Unterseite des Vorsatzgerätes (2, 20) den Boden (10) kontaktierende Abstandssensoren (13) angeordnet sind, wobei eine Steuerungsvorrichtung (17) zur Auswertung der in einem ersten Betriebsmodus von den Abstandssensoren (13) bereitgestellten Signalen vorgesehen ist, um im ersten Betriebsmodus in Abhängigkeit von den Signalen eine Querregelung des Vorsatzgerätes (2, 20) und/oder der jeweiligen Seitensegmente (22R, 22L) anzusteuern, wobei ein Querlagewinkel ($\gamma$) durch Schwenken des Vorsatzgerätes (2, 20) um eine virtuelle Pendelachse (8) der Aufnahmevorrichtung (3) einstellbar ist, **dadurch gekennzeichnet, dass** die Steuerungsvorrichtung (17) dazu eingerichtet ist, in einem zweiten Betriebsmodus, in welchem nur die Stützelemente (32R, 32L) mit dem Boden (10) in Kontakt stehen, eine Querregelung des Vorsatzgerätes (2, 20) und/oder der jeweiligen Seitensegmente (22R, 22L) in Abhängigkeit von Signalen, die von den Stützelementen (32R, 32L) zugeordneten Sensoreinheiten (34) zur Bestimmung des Abstandes (12) des Vorsatzgerätes (2, 20) und/oder der jeweiligen Seitensegmente (22R, 22L) zum Boden (10) bereitgestellt werden, durchzuführen.

13. Selbstfahrender Mähdrescher (1) nach Anspruch 12, **dadurch gekennzeichnet, dass** die Steuerungsvorrichtung (17) dazu eingerichtet ist, in dem zweiten Betriebsmodus die Querregelung des Vorsatzgerätes (2, 20) in Abhängigkeit von einer Auslenkungsdifferenz ($\Delta h$) der Auslenkung (hR, hL) der Stützelemente (32R, 32L) zu regeln, indem den Stützelementen (32R, 32L) zugeordnete druckgeregelte Aktoren (33R, 33L) angesteuert werden, bis die Auslenkungsdifferenz ($\Delta h$) im Wesentlichen Null beträgt.

14. Selbstfahrender Mähdrescher (1) nach Anspruch 12 oder 13, **dadurch gekennzeichnet, dass** die Seitensegmente (22R, 22L) jeweils durch ein Rahmengelenk (23) mit dem Mittensegment (21) um eine in Fahrtrichtung (FR) orientierte Schwenkachse (24) schwenkbar verbunden sind, wobei das jeweilige Seitensegment (22R, 22L) zur Querregelung mittels eines von der Steuerungsvorrichtung (17) angesteuerten Aktors (25) relativ zum Mittensegment (21) um die Schwenkachse (24) verschwenkbar ist, wobei die Steuerungsvorrichtung (17) dazu eingerichtet ist, im zweiten Betriebsmodus die Position des jeweiligen Seitensegmentes (22R. 22L) relativ zum Mittensegment (21) zu bestimmen, wobei die Steuerungsvorrichtung (17) eine Abstandsdifferenz ($\Delta$hR, $\Delta$hL) des jeweiligen Seitensegmentes (22R, 22L) zum Boden (10) aus von den Signalen der Abstandssensoren (13) unabhängigen Messgrößen bestimmt.

15. Selbstfahrender Mähdrescher (1) nach einem der Ansprüche 12 bis 14, **dadurch gekennzeichnet, dass** die Steuerungsvorrichtung (17) dazu eingerichtet ist, im zweiten Betriebsmodus die Querregelung des jeweiligen Seitensegmentes (22R, 22L) in Abhängigkeit vom Neigungswinkel ($\alpha$) der Aufnahmevorrichtung (3), einem Querlagewinkel ($\gamma$) des Mittensegmentes (21), einer Neigung ($\beta$R, $\beta$L) des jeweiligen Seitensegmentes (22R, 22L) zum Mittensegment (21) sowie der Auslenkung (hR, hL) des dem jeweiligen Seitensegment (22R, 22L) zugeordneten Stützelementes (32R, 32L) als von den Signalen der Abstandssensoren (13) unabhängige Messgrößen durchzuführen.

**Fig. 1**

EP 4 646 915 A1

Fig. 2

Fig. 3

**EUROPÄISCHER RECHERCHENBERICHT**

Europäisches Patentamt
European Patent Office
Office européen des brevets

Nummer der Anmeldung

EP 25 16 7285

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 4 147 563 A1 (CLAAS SELBSTFAHRENDE ERNTEMASCHINEN GMBH [DE]) 15. März 2023 (2023-03-15) * das ganze Dokument * ----- | 1-15 | INV. A01D41/14 |
| A | EP 3 420 797 A1 (GERINGHOFF CARL GMBH CO KG [DE]) 2. Januar 2019 (2019-01-02) * das ganze Dokument * ----- | 1-15 | |
| A | US 2022/061211 A1 (KARST AUSTIN J [US]) 3. März 2022 (2022-03-03) * das ganze Dokument * ----- | 1-15 | |
| A | US 2008/177449 A1 (PICKETT TERENCE DANIEL [US] ET AL) 24. Juli 2008 (2008-07-24) * das ganze Dokument * ----- | 1-15 | |
| A | EP 4 162 789 A1 (CLAAS SELBSTFAHRENDE ERNTEMASCHINEN GMBH [DE]) 12. April 2023 (2023-04-12) * das ganze Dokument * ----- | 1-15 | RECHERCHIERTE SACHGEBIETE (IPC) |
| A | US 2004/006958 A1 (THIEMANN HOLGER [DE] ET AL) 15. Januar 2004 (2004-01-15) * das ganze Dokument * ----- | 1-15 | A01D |

Der vorliegende Recherchenbericht wurde für alle Patentansprüche erstellt

| Recherchenort | Abschlußdatum der Recherche | Prüfer |
|---|---|---|
| München | 6. September 2025 | Giorgini, Gabriele |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 16 7285

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-09-2025

| Im Recherchenbericht angeführtes Patentdokument | Datum der Veröffentlichung | Mitglied(er) der Patentfamilie | Datum der Veröffentlichung |
|---|---|---|---|
| EP 4147563 A1 | 15-03-2023 | DE 102021123337 A1 | 09-03-2023 |
| | | EP 4147563 A1 | 15-03-2023 |
| | | US 2023076926 A1 | 09-03-2023 |
| EP 3420797 A1 | 02-01-2019 | CA 3008964 A1 | 21-12-2018 |
| | | DE 102017113776 A1 | 27-12-2018 |
| | | EP 3420797 A1 | 02-01-2019 |
| | | HU E057707 T2 | 28-05-2022 |
| | | PL 3420797 T3 | 19-04-2022 |
| | | US 2018368317 A1 | 27-12-2018 |
| US 2022061211 A1 | 03-03-2022 | CA 3122666 A1 | 28-02-2022 |
| | | US 2022061211 A1 | 03-03-2022 |
| US 2008177449 A1 | 24-07-2008 | AU 2008206582 A1 | 24-07-2008 |
| | | BR PI0806930 A2 | 29-04-2014 |
| | | EP 2126757 A2 | 02-12-2009 |
| | | US 2008177449 A1 | 24-07-2008 |
| | | WO 2008088916 A2 | 24-07-2008 |
| EP 4162789 A1 | 12-04-2023 | DE 102021125815 A1 | 06-04-2023 |
| | | EP 4162789 A1 | 12-04-2023 |
| | | US 2023105797 A1 | 06-04-2023 |
| US 2004006958 A1 | 15-01-2004 | AT E409404 T1 | 15-10-2008 |
| | | DE 10227484 A1 | 26-02-2004 |
| | | EP 1374661 A1 | 02-01-2004 |
| | | US 2004006958 A1 | 15-01-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 4162789 A1

- DE 102021123337 A1